# EUROPEAN PATENT SPECIFICATION

(11) **EP 3 891 015 B1**
(45) Date of publication and mention of the grant of the patent: **04.05.2022**
(21) Application number: 19835774.1
(22) Date of filing: 17.12.2019
(51) Int. Cl.: B60N 2/58

(54) **VEHICLE SEAT ELEMENT PROVIDED WITH A COVER AND METHOD FOR MANUFACTURING SUCH A VEHICLE SEAT ELEMENT**
FAHRZEUGSITZELEMENT MIT ABDECKUNG UND VERFAHREN ZUR HERSTELLUNG EINES SOLCHEN FAHRZEUGSITZELEMENTS
ÉLÉMENT DE SIÈGE DE VÉHICULE POURVU D'UN COUVERCLE ET PROCÉDÉ DE FABRICATION D'UN TEL ÉLÉMENT DE SIÈGE DE VÉHICULE

(30) Priority: 19.12.2018 FR 1873367
(43) Date of publication of application: 13.10.2021
(73) Proprietor: Martur France Automotive Seating and Interiors Sarl, 92500 Rueil-Malmaison (FR)
(72) Inventor: PEREZ, Jean Claude, 92500 Rueil-Malmaison (FR); HAYAT, David, 92500 Rueil-Malmaison (FR)
(74) Representative: Robba, Pierpaolo
(86) International application number: PCT/IB2019/060926
(87) International publication number: WO 2020/128835

(56) References cited:
- EP-A2- 2 052 905
- DE-A1-102016 002 587
- FR-A1- 2 922 497

## Description

### Technical Field of the Invention

The present invention relates to a vehicle seat element provided with a cover, as well as to a method for manufacturing such a vehicle seat element.

More particularly, the present invention relates to a vehicle seat element provided with a seamless cover, as well as to a method for manufacturing such a vehicle seat element. Such a vehicle seat element can be, for instance, a seat cushion or a seat backrest.

### Prior Art

Several methods are known for producing a vehicle seat element provided with a cover. For instance, the cover can be fastened to a support body, namely to a foam body or some other molded part of the vehicle seat element.

Said solution is especially used when the vehicle seat element has a contour comprising concave and/or convex surfaces, such as a vehicle seat element comprising a recessed middle section and raised side sections.

However, the presence of seams on the surface of the cover of the vehicle seat element represents a drawback of the vehicle seat construction.

First of all, such seams deteriorate the aesthetical appearance of the vehicle seat. Secondly, the presence of seams between the middle section and the side sections does not allow to use a continuous design, such a picture or a pattern, for decorating the cover of the vehicle seat element.

Thirdly, over time some stiches can become loosened or be torn, thus causing a partial separation of the cover from the support body.

In order to overcome the aforesaid drawbacks, vehicle seat elements provided with a seamless cover have been developed.

In general, such solutions comprise a seamless cover and a molding secured to a non-visible surface facing away from the visible surface of the cover.

US 2017/0028887 discloses a vehicle seat element comprising a seamless cover provided with a lining and a molding secured to the lining, in particular to the surface side of the lining facing away from the cover.

According to the teachings of US 2017/0028887, the lining and the cover are cut to size in a manner corresponding to the element to be covered (e.g. a vehicle seat cushion or a vehicle seat backrest), a first surface of the lining is bonded to the cover, and a molding is successively secured to the second, opposite surface of the lining (i.e. the surface of the lining facing away from the cover).

The molding can be applied to the lining either directly or indirectly, with the interposition of a carrier.

Then, the molding is fastened to a support body, such as a foam body or some other molded part of the vehicle seat.

Such a solution, although allowing to obtain a seamless cover, still has some drawbacks. More particularly, the arrangement disclosed in US 2017/0028887 involves a high number of components and, correspondingly, the method for obtaining said arrangement involves a high number of steps.

This makes the aforesaid solution complex, time-consuming and expensive.

Moreover, the comfort of the seat is deteriorated, as the presence of several different layers decreases the elasticity and the flexibility of the cover.

EP 2 052 905 discloses a vehicle seat element comprising a support body and a cover, which is sized to coat said support body and is provided with a lining.

An object of the present invention is therefore to overcome the limitations of the prior art, by providing a solution allowing to obtain a vehicle seat element provided with a cover in an easy and cost-effective way.

More particularly, an object of the present invention is to provide a solution allowing to obtain a vehicle seat element provided with a cover, preferably a seamless cover, by using a limited number of components.

This and other objects are achieved by a vehicle seat element and a corresponding method as claimed in the appended claims.

### Summary of the Invention

According to the invention, the vehicle seat element comprises a support body and a cover provided with a lining, wherein the lining comprises one or more lining elements and wherein at least one of said lining elements includes a joining portion, attached to the cover, and at least one connecting flap, which is provided on a portion of the perimeter of said joining portion and folded towards the support body and through which the lining is connected to said support body.

In a preferred embodiment of the invention, the lining comprises a plurality of adjacent lining elements.

In a particularly preferred embodiment of the invention, at least two adjacent lining elements include a joining portion and a connecting flap, the connecting flaps of the first and the second lining elements being provided at facing portions of the perimeters of the joining portions of the first and the second lining elements, whereby the facing connecting flaps of the first and the second lining elements together are connected to the support body of the vehicle seat element.

In an even more particularly preferred embodiment of the invention, the vehicle seat element comprises a recessed middle section and a pair of raised side sections on opposite sides of said middle section, the vehicle seat further comprises a cover, intended to coat said middle section and said side sections, and a lining, wherein said lining comprises at least three lining elements, including a first lining element comprising a joining portion attached to the cover at said middle section, a second lining element comprising a joining portion attached to the cover at a first one of said side sections, and a third lining element comprising a joining portion attached to the cover at the second, opposite one of said side sections.

According to said particularly preferred embodiment of the invention, the first lining element comprises a first connecting flap arranged at a portion of the perimeter of the joining portion of the first lining element facing the perimeter of the joining portion of the second lining element, and a second connecting flap arranged at a portion of the perimeter of the joining portion of the first lining element facing the perimeter of the joining portion of the third lining element, the second lining element comprises a connecting flap arranged at a portion of the perimeter of the joining portion of the second lining element facing the perimeter of the joining portion of the first lining element, and the third lining element comprises a connecting flap arranged at a portion of the perimeter of the joining portion of the third lining element facing the perimeter of the joining portion of the first lining element, whereby the first connecting flap of the first lining element and the connecting flap of the second lining element are facing each other and the second connecting flap of the first lining element and the connecting flap of the third lining element are facing each other, the cover being connected to the support body through said connecting flaps of the lining elements.

In an alternative embodiment of the invention, the lining comprises a single lining element, in which several joining portions can be defined; at least at one portion of the perimeter of at least one of said joining portions, the lining element is provided with a connecting flap, folded towards the support body, through which flap the lining is connected to said support body; the connecting flap is then folded back toward the cover and joined to a corresponding portion of an adjacent joining portion of the single lining element.

The connecting flaps of the lining elements are preferably provided with adequate means for the connection to the support body of the vehicle seat element.

In a preferred embodiment of the invention, the connecting flaps of the lining elements are provided with one or more through-holes and the support body of the vehicle seat element is provided with one or more metallic wires and hog rings or clips or similar connecting elements pass around the metallic wires of the support body and into the through-holes of the connecting flaps.

The support body of the vehicle seat element preferably is a foam body of the vehicle seat element.

The vehicle seat element preferably is a vehicle seat cushion or a vehicle seat backrest, most preferably a vehicle seat cushion or a vehicle seat backrest having a recessed middle section and raised side sections on opposite sides of said middle section.

According to the invention, the method for manufacturing a vehicle seat element essentially comprises the steps of:
- providing a support body;
- providing a cover intended to coat said support body;
- providing a lining, wherein said lining comprises one or more lining elements and wherein at least one of said lining elements includes a joining portion and a connecting flap provided on a portion of the perimeter of said joining portion;
- folding said connecting flap(s) of said lining element(s) towards the support body and, if necessary, joining these connecting flaps together by a seam or by an adhesive layer;
- joining the joining portion(s) of said lining element(s) to the underside of the cover (i.e. the side opposite to the visible side of the cover);
- connecting said connecting flap(s) to the support body.

Thanks to the arrangement and to the method according to the invention, it is possible to manufacture a vehicle seat element provided with a cover in an easy and cost-effective way.

More particularly, since the lining of the cover is directly used for the connection to the support body of the vehicle seat element, a vehicle seat element provided with a cover can be manufactured by using a limited number of components.

If the joining portions of the lining elements are attached to the cover in a seamless way (such as, for instance, by gluing or by welding), a vehicle seat element provided with a seamless cover can be advantageously obtained by the invention.

The aesthetic appearance of a seamless cover is particularly appreciated by users and a seamless cover allows to use a continuous design for decorating the cover itself. Moreover, thanks to the absence of seams, the user will have the impression that the vehicle seat element (e.g. the vehicle seat cushion) is larger than usual, which is also generally appreciated by users.

### Brief Description of the Drawings

Further features and advantages will be more evident from the detailed description of some preferred embodiments of the invention, given by way of non-limiting example, with reference to the accompanying drawings, in which:
Figure 1 schematically shows a cross-sectional view of a vehicle seat element according to a first preferred embodiment of the invention;
Figure 2 schematically shows a perspective cut-away view of the vehicle seat element of Figure 1;
Figure 3 schematically shows a cross-sectional view of a vehicle seat element according to a second preferred embodiment of the invention;
Figure 4 schematically shows a perspective view of the vehicle seat element of Figure 3;
Figure 5 schematically shows a cross-sectional view of a vehicle seat element according to a third preferred embodiment of the invention.

### Detailed Description of Preferred Embodiments of the Invention

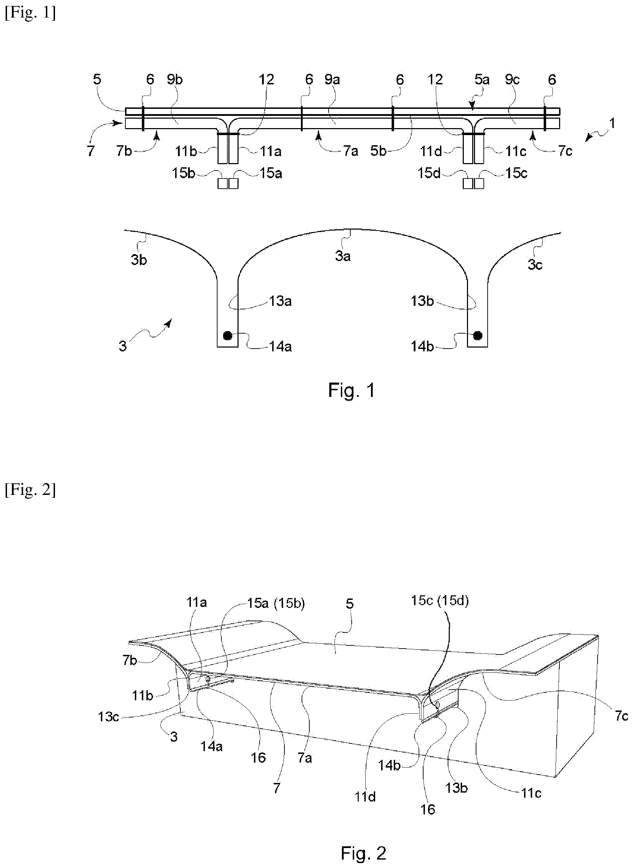

With reference initially to Figure 1, a vehicle seat element 1 according to a first preferred embodiment of the invention is schematically shown in a cross-sectional view.

The vehicle seat element 1 essentially comprises a support body 3 and a cover 5 provided with a lining 7.

In the shown embodiment, the vehicle seat element is a vehicle seat cushion 1. In alternative embodiments, the vehicle seat element could be a vehicle seat backrest or another vehicle seat element to be coated with a cover.

In the shown embodiment, the support body 3 preferably is a foam body of the vehicle seat element. In alternative embodiments, the support body could be another part of the vehicle seat element, preferably a molded part of said vehicle seat element.

In the shown embodiment, the support body 3 comprises a recessed middle section 3a and raised side sections 3b, 3c at opposite sides of the middle section 3a.

When the vehicle seat element is a vehicle seat cushion, the support body may also comprise a raised rear section (not visible in Figure 1).

The cover 5 is configured to coat the support body 3.

More particularly, the cover 5 is configured to coat the middle section 3a and the side sections 3b, 3c of the support body 3.

If a rear section of the support body is provided, the cover 5 will be configured to coat the rear section of the support body, as well.

Preferably, the cover 5 has a shape that fits precisely with the outer contour of the support body 3.

The cover 5 can be made of any suitable material known in the art for covering vehicle seat elements, such as natural or synthetic fabrics, leather, and the like, or even of a combination of the above-mentioned materials.

It is possible that the cover 5 is beforehand subjected to any technique known in the art for cover elements. For instance, an impression, piece of embroidery, screen print, inkjet print, offset print and the like can be applied to the cover 5 before it is connected to the lining 7.

In a per se known manner, the cover 5 is provided, at its underside 5b (i.e. at the side that, in use, is opposite to the visible side 5a of the cover), with a lining 7.

According to the invention, the lining 7 comprises one or more lining elements and at least one of said lining elements includes a joining portion, attached to the cover, and a connecting flap, provided at a portion of the perimeter of said joining portion and folded towards the support body, through which connecting flap the lining (and consequently the cover) is connected to said support body.

The lining elements of the lining 7 can be made of any suitable material known in the art. More particularly, said lining elements can be made of a foam sheet. As an alternative, the lining elements of the lining 7 can be made of a nonwoven or woven fabric or the like, or even of a combination of the above-mentioned materials.

In the shown embodiment, the lining comprises a plurality of lining elements. More particularly, the lining 7 comprises three lining elements, including a first lining element 7a, comprising a joining portion 9a attached to the cover at said middle section 3a of the support body 3, a second lining element 7b, comprising a joining portion 9b attached to the cover at a first one 3b of the side sections of the support body 3, and a third lining element 7c, comprising a joining portion 9c attached to the cover at the second, opposite one 3c of said side sections of said support body 3.

The lining elements are arranged so that the perimeter of the joining portion 9a of the first lining element 7a and the perimeter of the joining portion 9b of the second lining element 7b are adjacent to each other along a side of the joining portions of said first and second lining elements, and the perimeter of the joining portion 9a of the first lining element 7a and the perimeter of the joining portion 9c of the third lining element 7c are adjacent to each other along a side of the joining portions of said first and third lining elements. Preferably, the joining portions 9a, 9b, 9c of the lining elements are sized and arranged so that they cover the whole surface of the underside 5b of the cover 5.

It will be evident to the person skilled in the art that, if the vehicle seat element includes a rear portion, the lining 7 could correspondingly comprise a fourth lining element comprising a joining portion attached to the cover at said rear section of the support body. The joining portions 9a, 9b, 9c of the lining elements 7a, 7b, 7c can be attached to the underside 5b of the cover 5 by any technique known to the person skilled in the art. In the preferred embodiment shown in Figure 1, the joining portions 9a, 9b, 9c of the lining elements 7a, 7b, 7c are attached to the underside 5b of the cover 5 by means of stitches 6. The first lining element 7a comprises a first connecting flap 11a arranged at the side of the perimeter of the joining portion 9a of the first lining element 7a facing the perimeter of the joining portion 9b of the second lining element 7b and a second connecting flap 11d arranged at the side of the perimeter of the joining portion 9a of the first lining element 7a facing the perimeter of the joining portion 9c of the third lining element 7c. The second lining element 7b comprises a connecting flap 11b arranged at the side of the perimeter of the joining portion 9b of the second lining element 7b facing the perimeter of the joining portion 9a of the first lining element 7a. The third lining element 7c comprises a connecting flap 11c arranged at the side of the perimeter of the joining portion 9c of the third lining element 7c facing the perimeter of the joining portion 9a of the first lining element 7a.

The connecting flaps 11a, 11b and 11c, 11d are folded towards the support body 3 (i.e. downwards in Figure 1).

As a result, the first connecting flap 11a of the first lining element and the connecting flap 11b of the second lining element are adjacent to and facing each other and they are used for connecting the lining 7 to the support body.

To this purpose, the support body 3 is provided with a first recess 13a at the area between the middle section 3a and the first side section 3b of the support body.

In order to obtain a firm connection of the lining to the support body, the connecting flaps 11a, 11b can be fastened to each other, for instance by means of a seam 12.

Analogously, the second connecting flap 11d of the first lining element and the connecting flap 11c of the third lining element are adjacent to and facing each other and they, too, are used for connecting the lining 7 to the support body.

Correspondingly, the support body 3 is provided with a second recess 13b at the region between the middle section 3a and the second side section 3c of the support body.

The connecting flaps 11c, 11d can be fastened to each other, for instance by means of a seam 12, as well.

In order to obtain and even more stable connection, it is possible to couple a reinforcing element (namely, a non-woven reinforcing element) to the wall of one or more connecting flaps. In this case, the seam 12 not only has the function of fastening the connecting flaps together, but also of fastening said reinforcing element(s) to the connecting flaps.

The connecting flap 11a, 11b and 11c, 11d of the lining elements 7a, 7b and 7c are respectively provided with first connecting elements 15a, 15b and 15c, 15d for the connection to the support body 3, and the first and second recesses 13a, 13b of the support body are correspondingly provided with second connecting elements for the connection to the respective connecting flaps.

As better shown in Figure 2, the first connecting elements 15a, 15b and 15c, 15d of the connecting flaps 11a, 11b and 11c, 11d can be made as through-holes 15a, 15b and 15c, 15d and the second connecting elements 14a, 14b in the recesses 13a, 13b of the support body can be made as metallic wires 14a, 14b overmolded in the support body 3 and arranged at the bottom of said recesses 13a, 13b.

Hog rings 16 or analogous fastening elements can pass about the metallic wire 14a in the recess 13a and through the through-holes 15a, 15b of the connecting flaps 11a, 11b for connecting said connecting flaps to the support body. Analogously, hog rings 16 or analogous fastening elements can pass about the metallic wire 14b in the recess 13b and through the through-holes 15c, 15d of the connecting flaps 11c, 11d for connecting said connecting flaps to the support body.

Thanks to the fact that the lining 7 (namely the connecting flaps 11a - 11d of the lining elements 7a - 7c) is directly connected to the support body 3 of the vehicle seat element 1, the cover 5 can be applied to the support body 3 in an easy and cost-effective way, and by using a limited number of components.

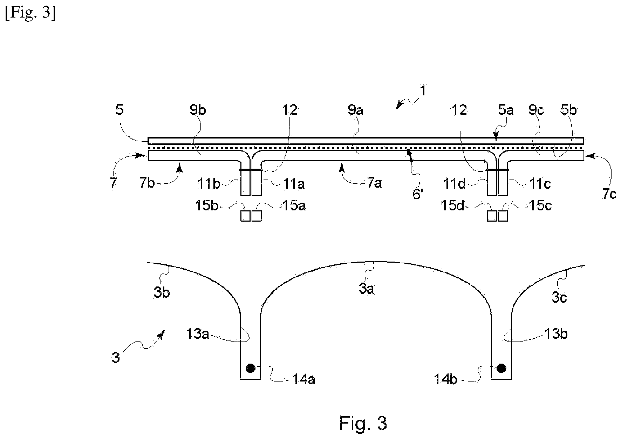

Figure 3 shows a second preferred embodiment of the invention.

The vehicle seat element 1 of this second embodiment is almost identical to the vehicle seat element described above with reference to the first embodiment and, accordingly, it will not described in detail.

The vehicle seat element 1 of this second embodiment differs from the vehicle seat element of the first embodiment in that the joining portions 9a, 9b and9c of the lining elements 7a, 7b and 7c forming the lining 7 are bonded to the underside 5b of the cover 5 by means of an adhesive layer 6'.

The layer 6' can be made, for instance, of a hot melt adhesive, so that the joining portions 9a, 9b and 9c of the lining elements 7a, 7b and 7c forming the lining 7 can be molten to the underside 5b of the cover 5. However, other types of glues and adhesives can also be used.

According to this preferred embodiment of the invention, a vehicle seat element 1 provided with a seamless cover 5 can be advantageously obtained.

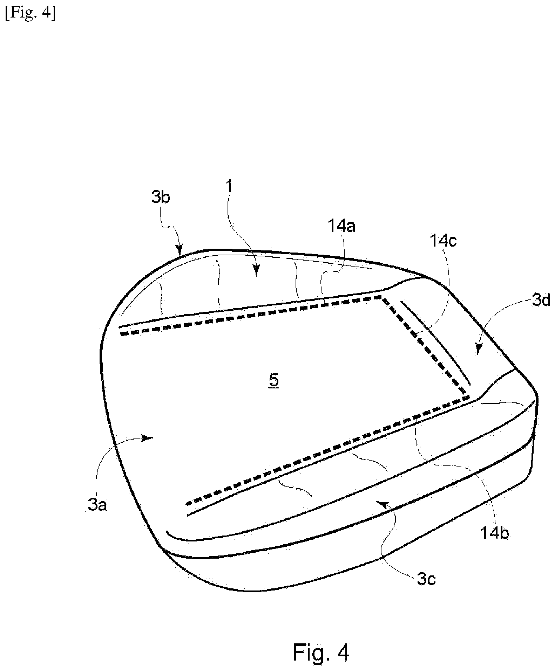

Such a vehicle seat element 1 is also shown in Figure 4.

In Figure 4, the rear section 3d of the support body 3 is also visible.

The cover 5 will be fastened to the support body of the vehicle seat element through the lining bonded to the underside of said cover, and without any seams.

The lining elements of the lining will be connected to the metallic wires 14a, 14b overmolded in the support body, as previously disclosed.

As can be seen in Figure 4, it can be envisaged that a further lining element carrying a connecting flap is provided at the rear section of the support body and that the first lining element is correspondingly provided with a further connecting flap at the portion of the perimeter of its joining portion oriented towards said rear section of the support body. Said further connecting flaps can be connected to the support body, for instance by providing a further recess between the middle section and the rear section of the support body and arranging a further metallic wire 14c in said further recess.

The vehicle seat element 1 has an outer surface without seams or other visible fastenings, which improves the aesthetic appearance of the vehicle seat element.

Moreover, the risk of deterioration of the connection of the cover to the underlying support body is avoided.

From the above description, it will be evident to the person skilled in the art that the method for manufacturing a vehicle seat element 1 according to the above-described preferred embodiments of the invention will comprise the steps of:
- providing the support body 3;
- providing the cover 5;
- providing the lining 7, comprising the lining elements 7a, 7b and 7c;
- folding the connecting flaps 11a, 11b of the lining elements 7a, 7b and the connecting flaps 11c, 11d of the lining elements 7c, 7a towards the support body 3 and fastening them together by the seam 12;
- attaching the joining portions 9a - 9c of said lining elements 7a, 7b and 7c to the underside 5b of the cover 5 (either by stitches 6 or by the adhesive layer 6'), so that the side of the perimeter of the joining portion 9a of the first lining element 7a carrying the first connecting flap 11a is adjacent to the side of the perimeter of the joining portion 9b of the second lining element 7b carrying the connecting flap 11b, and the side of the perimeter of the joining portion 9a of the first lining element 7a carrying the second connecting flap 11d is adjacent to the side of the perimeter of the joining portion 9c of the third lining element 7c carrying the connecting flap 11c;
- inserting the connecting flaps 11a, 11b of the lining elements 7a, 7b into the recess 13a of the support body 3 and the connecting flaps 11c, 11d of the lining elements 7c, 7a into the recess 13b of the support body 3;
- connecting the connecting flaps 11a, 11b of the lining elements 7a, 7b to the support body 3 by means of hog rings 16 or analogous fastening means passing around the metallic wire 14a in the recess 13a and through the through-holes 15a, 15b of the connecting flaps 11a, 11b, and connecting the connecting flaps 11c, 11d of the lining elements 7c, 7a to the support body 3 by means of hog rings 16 or analogous fastening means passing around the metallic wire 14b in the recess 13b and through the through-holes 15c, 15d of the connecting flaps 11c, 11a.

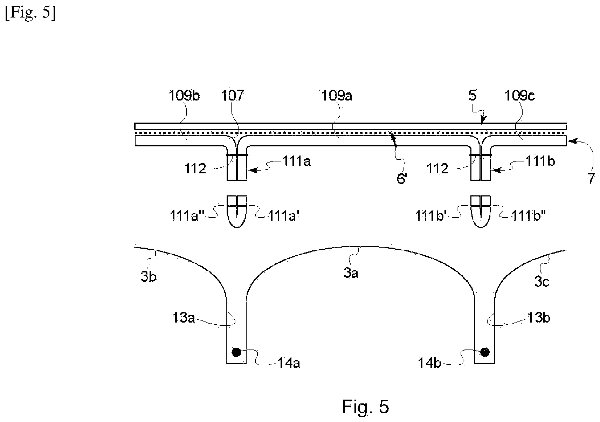

Figure 5 shows a further preferred embodiment of the invention, which differs from the previously described embodiments in that the lining 7 comprises a single lining element 107.

According to this preferred embodiment, the single lining element 107 comprises a plurality of joining portions, comprising a first joining portion 109a attached to the cover at the middle section 3a of the support body 3, a second joining portion 109b attached to the cover at a first one 3b of the side sections of the support body 3, and a third joining portion 109c attached to the cover at the second, opposite one 3c of said side sections of said support body 3.

The joining portions are arranged so that the perimeter of the first joining portion 109a is adjacent to the perimeter of the second joining portion 109b along a first side of said first joining portion and is adjacent to the perimeter of the third joining portion 109c along a second, opposite side of said first joining portion.

The lining element 107 comprises a first connecting flap 111a arranged between the side of the perimeter of the first joining portion 109a facing the perimeter of the second joining portion 109b and the side of the perimeter of the second joining portion 109b facing the perimeter of the first joining portion 109a. The connecting flap 111a has a first branch 111a' that, starting from the first joining portion 109a is folded towards the support body 3 (i.e. downwards in Figure 5), and a second branch 111a" that is folded back towards the cover 5 (i.e. upwards in Figure 5) and merges into the second joining portion 109b.

Said branches 111a', 111a" can be fastened to each other, for instance by a seam 112. The branches 111a', 111a" of the first connecting flap can be connected to the support body 3 at a first recess 13a, in the same way as described with reference to the previous embodiments.

Analogously, the lining element 107 comprises a second connecting flap 111b arranged between the side of the perimeter of the first joining portion 109a facing the perimeter of the third joining portion 109c and the side of the perimeter of the third joining portion 109c facing the perimeter of the first joining portion 109a. The connecting flap 111b has a first branch 111b' that, starting from the first joining portion 109a is folded towards the support body 3 (i.e. downwards in Figure 5), and a second branch 111b'' that is folded back towards the cover 5 (i.e. upwards in Figure 5) and merges into the third joining portion 109c.

Said branches 111b', 111b" can be fastened to each other, for instance by a seam 112. The branches 111b', 111b" of the second connecting flap can be connected to the support body 3 at a second recess 13b, in the same way as described with reference to the previous embodiments.

As a result, also in this further embodiment, the lining 7 (namely the connecting flaps 111a and 111b of the lining element 107) is directly connected to the support body 3 of the vehicle seat element 1, so that the cover 5 can be applied to the support body 3 in an easy and cost-effective way, and by using a limited number of components.

It will be evident to the person skilled in the art that the above description of preferred embodiments of the invention has been given merely by way of example and that several variants and modification within the reach of the person skilled in the art can be envisaged, without departing from the scope of protection of the appended claims.

More particularly, the shape of the different components of the vehicle seat element as well as the materials used for these components, the number of lining elements, the techniques used for attaching the lining elements to the underside of the cover, the nature of the elements used for connecting the connecting flaps of the lining elements to the support body may differ from the above disclosure without departing from the scope of protection of the appended claims.

## Claims

1. Vehicle seat element (1), comprising a support body (3) and a cover (5), which is sized to coat said support body and is provided with a lining (7), **characterized in that** said lining (7) comprises one or more lining elements (7a, 7b, 7c; 107), at least one of said lining elements (7a, 7b, 7c; 107) includes at least one joining portion (9a, 9b, 9c; 109a, 109b, 109c), attached to said cover, and at least one connecting flap (11a, 11b, 11c, 11d; 111a, 111b), provided at a portion of the perimeter of said joining portion (9a, 9b, 9c; 109a, 109b, 109c) and folded towards said support body (3), and said connecting flap(s) (11a, 11b, 11c, 11d; 111a, 111b) of said lining element(s) (7a, 7b, 7c; 107) is/are connected to said support body (3), whereby said cover (5) is connected to said support body (3) by means of said lining (7).

2. Vehicle seat element (1) according to claim 1, wherein said lining (7) includes a plurality of lining elements (7a, 7b, 7c), and wherein at least two adjacent lining elements (7a, 7b; 7c, 7a) include a joining portion (9a, 9b; 9c, 9a) and a connecting flap (11a, 11b; 11c, 11d), the portion of the perimeter of the first one of said two adjacent lining elements carrying the connecting flap being adjacent to the portion of the perimeter of the second one of said two adjacent lining elements carrying the connecting flap, whereby the connecting flaps (11a, 11b; 11c, 11d) of said two adjacent lining elements (7a, 7b; 7c, 7a) are facing each other.

3. Vehicle seat element (1) according to claim 1, wherein said support body (3) has a middle section (3a) and two side sections (3b, 3c) arranged on opposite sides of said middle section, wherein said cover (5) is correspondingly sized so as to coat said middle section and said side sections of said support body, and wherein said lining (7) correspondingly comprises three lining elements (7a, 7b, 7c), including a first lining element (7a) comprising a joining portion (9a) attached to said cover at said middle section of said support body, a second lining element (7b) comprising a joining portion (9b) attached to said cover at a first one of said side sections of said support body, and a third lining element (7c) comprising a joining portion (9c) attached to said cover at the second, opposite one of said side sections of said support body.

4. Vehicle seat element (1) according to claim 3, wherein said first lining element (7a) comprises a first connecting flap (11a) arranged at a portion of the perimeter of said joining portion (9a) of said first lining element (7a) facing the perimeter of said joining portion (9b) of said second lining element (7b), and a second connecting flap (11d) arranged at a portion of the perimeter of said joining portion (9a) of said first lining element (7a) facing the perimeter of said joining portion (9c) of said third lining element (7c), said second lining element (7b) comprises a connecting flap (11b) arranged at a portion of the perimeter of said joining portion (9b) of said second lining element (7b) facing the perimeter of said joining portion (9a) of said first lining element (7a), and said third lining element (7c) comprises a connecting flap (11c) arranged at a portion of the perimeter of said joining portion (9c) of said third lining element (7c) facing the perimeter of said joining portion (9a) of said first lining element (7a).

5. Vehicle seat element (1) according to claim 1, wherein said support body (3) comprises one or more recesses (13a, 13b) at the position of said connecting flap(s) (11a, 11b, 11c, 11d), and wherein said connecting flap(s) (11a, 11b, 11c, 11d) penetrate(s) into said recess(es) and are connected to said support body at said recess(es).

6. Vehicle seat element (1) according to claim 3 or 4, wherein said support body (3) comprises a first recesses (13a) at the region between said middle section (3a) and the first one (3b) of said sections, and a second recess (13b) at the region between said middle section (3a) and the second one (3c) of said side sections, and wherein said first connecting flap (11a) of said first lining element and said connecting flap (11b) of said second lining element penetrate into said first recess (13a) and are connected to said support body at said first recess, and said second connecting flap (11d) of said first lining element and said connecting flap (11c) of said third lining element penetrate into said second recess (13b) and are connected to said support body at said second recess.

7. Vehicle seat element (1) according to any of the claims 1 - 6, wherein said connecting flap(s) comprise(s) first connecting elements (15a, 15b, 15c, 15d) and said support body comprises second connecting elements, said first and second connecting elements cooperating with each other for connecting said lining elements to said support body.

8. Vehicle seat element (1) according to claim 5 or 6, wherein a metallic wire (14a, 14b) is arranged in each of said recesses (13a, 13b), wherein each of said connecting flaps comprises a through-hole (15a, 15b, 15c, 15d), and wherein hog rings (16) or analogous fastening elements pass about said metallic wire and through the through-hole of said connecting flaps arranged in said recess.

9. Vehicle seat element (1) according to claim 1, wherein said lining (7) includes a single lining element (107), which comprises at least two adjacent joining portions (109a, 109b; 109a, 109c) and a connecting flap (111a; 111b) arranged on a portion of the perimeter of a first one of said two adjacent joining portions adjacent to a portion of the perimeter of the second one of said two adjacent joining portions, said connecting flap (111a; 111b) comprising a first branch (111a'; 111b') that, starting from said first joining portion, is folded towards said support body (3), and a second branch (111a"; 111b") that is folded back towards said cover and merges into said second joining portion.

10. Vehicle seat element (1) according to claim 9, wherein said support body (3) has a middle section (3a) and two side sections (3b, 3c) arranged on opposite sides of said middle section, wherein said cover (5) is correspondingly sized so as to coat said middle section and said side sections of said support body, and wherein said single lining element (107) includes a first joining portion (109a) attached to said cover at said middle section of said support body, a second joining portion (109b) attached to said cover at a first one of said side sections of said support body, and a third joining portion (109c) bonded to said cover at the second, opposite one of said side sections of said support body.

11. Vehicle seat element (1) according to claim 10, wherein said lining element (107) comprises a first connecting flap (111a) arranged at a portion of the perimeter of said first joining portion (109a) facing the perimeter of said second joining portion (109b), and a second connecting flap (111b) arranged at a portion of the perimeter of said first joining portion (109a) facing the perimeter of said third joining portion (109c).

12. Vehicle seat element (1) according to any of the claims 1 - 11, wherein said joining portion(s) of said lining element(s) is/are attached to said cover by means of stitches (6).

13. Vehicle seat element (1) according to any of the claims 1 - 11, wherein said joining portion(s) of said lining element(s) is/are bonded to said cover by means of an adhesive layer (6').

14. Vehicle seat element (1) according to any of the claims 1 - 11, wherein said lining element(s) is/are made of a foam sheet or a nonwoven fabric or a woven fabric, or a combination of said materials.

15. Method for manufacturing a vehicle seat element (1) comprising a support body (3) and a cover (5), which is sized to coat said support body and is provided with a lining (7), **characterized in that** it comprises the steps of:
- providing said support body (3);
- providing said cover (5), said cover being sized so as to coat said support body;
- providing one or more lining elements (7a, 7b, 7c; 107), at least one of said lining elements (7a, 7b, 7c, 107) including a joining portion (9a, 9b, 9c; 109a, 109b, 109c) and a connecting flap (11a, 11b, 11c, 11d; 11a, 11 1b), provided at a portion of the perimeter of said joining portion (9a, 9b, 9c; 109a, 109b, 109c);
- folding said connecting flap(s) (11a, 11b, 11c, 11d; 11a, 111b) of said lining element(s) (7a, 7b, 7c, 107) towards said support body (3) and, if necessary, joining said connecting flaps together by a seam (12; 112) or by an adhesive layer;
- attaching said joining portion(s) (9a, 9b, 9c; 109a, 109b, 109c) of said lining element(s) (11a, 11b, 11c, 11d; 11a, 111b ) to the underside of said cover (5);
- connecting said connecting flap(s) (11a, 11b, 11c, 11d; 11a, 111b) of said lining element(s) (11a, 11b, 11c, 11d; 11a, 111b) to said support body (3);
whereby said cover (5) is connected to said support body (3) by means of said lining (7).

## Patentansprüche

1. Fahrzeugsitzelement (1) mit einem Trägerkörper (3) und einem Überzug (5), der dafür bemessen ist, den Trägerkörper zu bedecken, und mit einer Auskleidung (7) versehen ist, **dadurch gekennzeichnet**, das die Auskleidung (7) ein oder mehrere Auskleidungselemente (7a, 7b, 7c; 107) aufweist, wenigstens eines der Auskleidungselemente (7a, 7b, 7c; 107) wenigstens einen Verbindungsabschnitt (9a, 9b, 9c, 109a, 109b, 109c), der an dem Überzug angebracht ist, und wenigstens eine verbindende Lasche (11a, 11b, 11c, 11d; 111a, 111b), die an einem Abschnitt des Umfangs des Verbindungsabschnitts (9a, 9b, 9c;109a, 109b, 109c) vorgesehen und zu dem Trägerkörper (3) hin gefaltet ist, aufweist, wobei die verbindende Lasche(n) (11a, 11b, 11c, 11d; 111a, 111b) des Auskleidungselements oder der Auskleidungselemente (7a, 7b, 7c; 107) mit dem Trägerkörper (3) verbunden ist/sind, wodurch der Überzug (5) über die Auskleidung (7) mit dem Trägerkörper (5)verbunden ist.

2. Fahrzeugsitzelement (1) nach Anspruch 1, wobei die Auskleidung (7) mehrere Auskleidungselemente (7a, 7b, 7c) aufweist und wenigstens zwei aneinander angrenzende Auskleidungselemente (7a, 7b; 7c, 7a) einen Verbindungsabschnitt (9a, 9b; 9c, 9a) und eine verbindende Lasche (11a, 11b; 11c, 11d) aufweist, wobei der Abschnitt des Umfangs des ersten der beiden aneinander angrenzenden Auskleidungselemente die verbindende Lasche trägt, die an den Abschnitt des Umfangs des zweiten der beiden aneinander angrenzenden Auskleidungselemente, welche die verbindende Lasche tragen, angrenzt, wodurch die verbindenden Laschen (11a, 11b, 11c, 11d) der beiden aneinander angrenzenden Auskleidungselemente (7a, 7b; 7c 7a) einander zugewandt sind.

3. Fahrzeugsitzelement nach Anspruch 1, wobei der Trägerkörper (3) einen mittleren Abschnitt (3a) und zwei seitliche Abschnitte (3b ,3c), die auf gegenüberliegenden Seiten des mittleren Abschnitts angeordnet sind, hat, wobei der Überzug (5) entsprechend bemessen ist, um den mittleren Abschnitt und die seitlichen Abschnitte des Trägerkörpers zu bedecken, und wobei die Auskleidung (7) dementsprechend drei Auskleidungselemente (7a, 7b, 7c) aufweist, nämlich ein erstes Auskleidungselement (7a), das einen Verbindungsabschnitt (9a) aufweist, der in dem mittleren Abschnitt des Trägerkörpers an des Überzugs angebracht ist, ein zweites Auskleidungselement (7b), das einen Verbindungsabschnitt (9b) aufweist, der in einem ersten der seitlichen Abschnitte des Trägerkörpers an des Überzugs angebracht ist, und ein drittes Auskleidungselement (7c), das einen Verbindungsabschnitt (9c) aufweist, der an dem Überzugs in dem zweiten seitlichen Abschnitt, der einem der seitlichen Abschnitte des Trägerkörpers gegenüber liegt, angebracht ist.

4. Fahrzeugsitzelement (1) nach Anspruch 3, wobei das erste Auskleidungselement (7a) eine erste verbindende Lasche (11a), die an einem Abschnitt des Umfangs des Verbindungsschnitts (9a) des ersten Auskleidungselements (7a) angebracht ist, das dem Umfang des Verbindungsschnitts (9b) des zweiten Auskleidungselements (7b) gegenüberliegt, und eine zweite verbindende Lasche (11d), die an einem Abschnitt des Umfangs des Verbindungsabschnitts (9a) des ersten Auskleidungselements (7a) angeordnet ist, das dem Umfang des Verbindungsabschnitts (9c) des dritten Auskleidungselement (7b) zugewandt ist, aufweist, wobei das zweite Auskleidungselement (7b) eine verbindende Lasche (11b) aufweist, die an einem Abschnitt des Umfangs des Verbindungsabschnitts (9b) des zweiten Auskleidungselement (7b) angeordnet ist, das dem Umfang des Verbindungsabschnitts (9a) des ersten Auskleidungselements (7a) zugewandt ist, und wobei das dritte Auskleidungselement (7c) eine verbindende Lasche (11c) aufweist, die an einem Abschnitt des Umfangs des Verbindungsabschnitts (9c) des dritten Auskleidungselements (7c) angeordnet ist, das dem Umfang des Verbindungsabschnitts (9a) des ersten Auskleidungselements (7a) zugewandt ist.

5. Fahrzeugsitzelement (1) nach Anspruch 1, wobei der Trägerkörper (3) eine oder mehrere Aussparungen (13a, 13b) an der Stelle der verbindenden Lasche(n) (11a, 11b, 11c, 11d) aufweist, und wobei die verbindende Lasche(n) (11a, 11b, 11, 11d) in die Aussparung(en) hineinragt/hineinragen und mit dem Trägerkörper an der oder den Aussparungen verbunden sind.

6. Fahrzeugsitzelement (1) nach Anspruch 3 oder 4, wobei der Trägerkörper (3) eine erste Aussparung (13a) in dem Bereich zwischen dem mittleren Abschnitt (3a) und dem ersten (3b) der Abschnitte und eine zweite Aussparung (13b) in einem Bereich zwischen dem mittleren Abschnitt (3a) und dem zweiten (3a) der seitlichen Abschnitte aufweist, wobei die erste verbindende Lasche (11a) des ersten Auskleidungselements und die verbindende Lasche (11b) des zweiten Auskleidungselements in die erste Aussparung (13a) hineinragen und an der ersten Aussparung mit dem Trägerkörper verbunden sind, und wobei die zweite verbindende Lasche (11d) des ersten Auskleidungselements und die verbindenden Lasche (11c) des dritten Auskleidungselements in die zweite Aussparung (13b) hineinragen und an der zweiten Aussparung (13b) hineinragen und an der zweiten Aussparung mit dem Trägerkörper verbunden sind.

7. Fahrzeugsitzelement (1) nach einem der Ansprüche 1 bis 6, wobei die verbindende(n) Lasche(n) erste Verbindungselemente (15a, 15b, 15c, 15d) aufweist/aufweisen und der Trägerkörper zweite Verbindungselemente aufweist, wobei die ersten und zweiten Verbindungselemente miteinander zusammen wirken, um die Auskleidungselemente mit dem Trägerkörper zu verbinden.

8. Fahrzeugsitzelement (1) nach Anspruch 5 oder 6, wobei ein Metalldraht (14a, 14b) in jeder aus Aussparungen (3a, 13b) angeordnet ist und jede der verbindenden Laschen ein durchgehendes Loch (15a, 15b, 15c, 15d) aufweist, und wobei Hogringe (16) oder entsprechende Befestigungselemente um den Metalldraht herum und durch das durchgehende Loch der verbindenden Laschen, die in der Aussparung angeordnet sind, hindurchgeführt sind.

9. Fahrzeugsitzelement (1) nach Anspruch 1, wobei die Auskleidung (7) ein einzelnes Auskleidungselement (107) aufweist, das wenigstens zwei aneinander angrenzende Verbindungsabschnitte (109, 109b; 109a, 109c) und eine verbindende Lasche (111a, 111b) aufweist, die an einem Abschnitt des Umfangs eines ersten der beiden angrenzenden Verbindungsbereiche angeordnet ist, die an einen Abschnitt des Umfangs des zweiten der beiden angrenzenden Verbindungsabschnitte angrenzt, wobei die Lasche (111a, 111b) ein ersten Zweig (111a'; 111b') aufweist, der ausgehend von einem ersten Verbindungsabschnitt zu dem Trägerkörper (3) hin gefaltet ist, und einen zweiten Zweig (111a"; 111b") der nach hinten zu dem Überzug hin gefaltet ist und in den zweiten Verbindungsabschnitt übergeht.

10. Fahrzeugsitzelement (1) nach Anspruch 9, wobei der Trägerkörper (3) einen mittleren Abschnitt (3a) und zwei seitliche Abschnitte (3b, 3c) aufweist, die auf gegenüberliegenden Seiten des mittleren Abschnitts angeordnet sind, wobei der Überzug (5) entsprechend bemessen ist, um den mittleren Anschnitt und die seitlichen Abschnitte des Trägerkörpers zu bedecken, und wobei das einzelne Auskleidungselement (107) einen ersten Verbindungsabschnitt (109a), der an dem mittleren Abschnitt des Trägerkörpers an dem Überzug angebracht ist, und ein zweiten Verbindungsabschnitt (109b), der an dem Überzug an einem ersten der seitlichen Abschnitte des Trägerkörpers angebracht ist, und einen dritten Verbindungsabschnitt (109c), der mit dem Überzug an dem zweiten, einem der seitlichen Abschnitte gegenüberliegenden Abschnitt des Trägerkörpers verbunden ist.

11. Fahrzeugsitzelement (1) nach Anspruch 10, wobei das Auskleidungselement (107) eine erste verbindende Lasche (111a), die an einem Abschnitt des Umfangs des ersten Verbindungsabschnitts (109a) angeordnet ist und dem Umfang des zweiten Verbindungsabschnitts (109b) zugewandt ist, und eine zweite verbindende Lasche (111b), die an einem Abschnitt des Umfangs des ersten Verbindungsabschnitts (109a) angeordnet und dem Umfang des dritten Verbindungsabschnitts (109c) zugewandt ist, aufweist.

12. Fahrzeugsitzelement (1) nach einem der Ansprüche 1 bis 11, wobei der Verbindungsabschnitt/ die Verbindungsschnitte des Auskleidungselements/ der Auskleidungselemente an dem Überzug durch Stiche (6) angebracht sind.

13. Fahrzeugsitzelement (1) nach einem der Ansprüche 1 bis 11, wobei der Verbindungsabschnitt/ die Verbindungsabschnitte des Auskleidungselements/ der Auskleidungselemente mit dem Überzug mittels einer Klebstoffschicht (6') verbunden ist/ verbunden sind.

14. Fahrzeugsitzelement (1) nach einem der Ansprüche 1 bis 11, wobei das Auskleidungselement/ die Auskleidungselement aus einem Schaumstoffblatt oder einem Vliesstoff oder einem Gewebe oder einer Kombination dieser Materialen ist/sind.

15. Verfahren zum Herstellen eines Fahrzeugsitzelements (1), das ein Trägerkörper (3) und einen Überzug (5) aufweist, der dazu bemessen ist, den Trägerkörper zu bedecken und mit einer Auskleidung (7) versehen ist, **dadurch gekennzeichnet, dass** es die folgende Schritte aufweist:
- Bereitstellen des Trägerkörpers (3),
- Bereitstellen des Überzugs (5), wobei der Überzug dazu bemessen ist, den Trägerkörper zu ummanteln,
- Bereitstellen eines oder mehrerer Auskleidungselemente (7a, 7b, 7c; 107), wobei wenigstens eines dieser Auskleidungselemente (7a, 7b, 7c, 107) einen Verbindungsabschnitt (9a, 9b, 9c; 109a, 109b, 109c) und eine verbindende Lasche (11a, 11b, 11c, 11d; 11a) aufweist, die an einem Abschnitt des Umfangs des Verbindungsabschnitts (9a, 9b, 9c; 109a, 109b, 109c) vorgesehen ist,
- Falten der verbindenden Lasche(n) (11a, 11b, 11c, 11d; 11a, 111d) des Auskleidungselements/ der Auskleidungselemente (7a, 7b, 7c, 107) hin zu dem Trägerkörper (3) und, falls erforderlich, verbinden der verbindenden Laschen zueinander mittels eines Saums (12;112) oder einer Klebstoffschicht,
- Anbringen des Verbindungsabschnitts/ der Verbindungsabschnitte (9a, 9b, 9c; 109a, 109b, 109c) des Auskleidungselements/ der Auskleidungselemente (11a, 11b, 11c, 11d; 11a, 111b) an der Unterseite des Überzugs (5),
- Verbinden der verbindenden Lasche/Laschen (11a, 11b, 11c, 11d; 11a, 111b) des Auskleidungselements/ der Auskleidungselemente (11a, 11b, 11c, 11d; 11a,111b) mit dem Trägerkörper (3),
- wodurch der Überzug (5) mittels der Auskleidung (7) mit dem Trägerkörper (3) verbunden ist.

## Revendications

1. Elément de siège de véhicule (1), comprenant un corps de support (3) et une coiffe (5), dimensionnée pour recouvrir ce corps de support et pourvue d'un revêtement (7), **caractérisé en ce que** ce revêtement (7) comprend un ou plusieurs éléments de revêtement (7a, 7b, 7c; 107), au moins l'un de ces éléments de revêtement (7a, 7b, 7c; 107) comprend au moins une partie de jonction (9a, 9b, 9c; 109a, 109b, 109c), fixée à cette coiffe, et au moins un volet de fixation (11a, 11b, 11c, 11d; 111a, 111b), prévu au niveau d'une portion du périmètre de cette partie de jonction (9a, 9b, 9c; 109a, 109b, 109c) et replié vers ce corps de support (3) et ce(s) volet(s) de liaison (11a, 11b, 11c, 11d; 111a, 111b) de cet(s) élément(s) de revêtement (7a, 7b, 7c; 107) est / sont fixé(s) à ce corps de support (3), cette coiffe (5) étant ainsi fixée à ce corps de support (3) au moyennant de ce revêtement (7).

2. Elément de siège de véhicule (1) selon la revendication 1, dans lequel ce revêtement (7) comprend une pluralité d'éléments de revêtement (7a, 7b, 7c) et dans lequel au moins deux éléments de revêtement adjacents (7a, 7b; 7c, 7a) comprennent une partie de jonction (9a, 9b; 9c, 9a) et un volet de fixation (11a, 11b; 11c, 11d), la portion du périmètre du premier de ces deux éléments de revêtement adjacents qui porte le volet de fixation étant adjacente à la portion du périmètre du deuxième de ces deux éléments de revêtement adjacents qui porte le volet de fixation, les volets de fixation (11a, 11b; 11c, 11d) de ces deux éléments de revêtement adjacents (7a, 7b; 7c, 7a) étant ainsi en face l'un de l'autre.

3. Elément de siège de véhicule (1) selon la revendication 1, dans lequel ce corps de support (3) comporte une section centrale (3a) et deux sections latérales (3b, 3c) agencées sur les côtés opposés de cette section centrale, dans lequel cette coiffe (5) est dimensionné de manière correspondante pour recouvrir cette section centrale et ces sections latérales de ce corps de support, et dans lequel ce revêtement (7) comprend en conséquence trois éléments de revêtement (7a, 7b, 7c), incluant un premier élément de revêtement (7a) comprenant une partie de jonction (9a) attachée à cette coiffe au niveau de cette section centrale de ce corps de support, un deuxième élément de revêtement (7b) comprenant une partie de jonction (9b) attachée à cette coiffe au niveau d'une première de ces sections latérales de ce corps de support, et un troisième élément de revêtement (7c) comprenant une partie de jonction (9c) attachée à cette coiffe au niveau de la deuxième section latérale opposée de ces sections latérales de ce corps de support.

4. Elément de siège de véhicule (1) selon la revendication 3, dans lequel ce premier élément de revêtement (7a) comprend un premier volet de fixation (11a) agencé au niveau d'une portion du périmètre de cette partie de jonction (9a) de ce premier élément de revêtement (7a) en face du périmètre de cette partie de jonction (9b) de ce deuxième élément de revêtement (7b) et un deuxième volet de fixation (11d) agencé au niveau d'une portion du périmètre de cette partie de jonction (9a) de ce premier élément de revêtement (7a) en face du périmètre de cette partie de jonction (9c) de ce troisième élément de revêtement (7c), ce deuxième élément de revêtement (7b) comprend un volet de fixation (11b) agencé au niveau d'une portion du périmètre de cette partie de jonction (9b) de ce deuxième élément de revêtement (7b) en face du périmètre de cette partie de jonction (9a) de ce premier élément de revêtement (7a), et ce troisième élément de revêtement (7c) comprend un volet de fixation (11c) agencé au niveau d'une portion du périmètre de cette partie de jonction (9c) de ce troisième élément de revêtement (7c) en face du périmètre de cette partie de jonction (9a) de ce premier élément de revêtement (7a).

5. Elément de siège de véhicule (1) selon la revendication 1, dans lequel ce corps de support (3) comprend une ou plusieurs rainures (13a, 13b) au niveau de la position de ce(s) volet(s) de fixation (11a, 11b, 11c, 11d) et dans lequel ce(s) volet(s) de liaison (11a, 11b, 11c, 11d) pénètrent dans cette(s) rainure(s) et sont fixés au corps de support au niveau de cette/ces rainure(s).

6. Elément de siège de véhicule (1) selon la revendication 3 ou 4, dans lequel ce corps de support (3) comprend une première rainure (13a) au niveau de la zone située entre cette section centrale (3a) et la première (3b) de ces sections latérales, et une deuxième rainure (13b) au niveau de la zone située entre cette section centrale (3a) et la deuxième (3c) de ces sections latérales, et dans lequel ce premier volet de fixation (11a) de ce premier élément de revêtement et ce volet de fixation (11b) de ce deuxième élément de revêtement pénètrent dans cette première rainure (13a) et sont fixés à ce corps de support au niveau de cette première rainure et ce deuxième volet de connexion (11d) de ce premier élément de revêtement et ce volet de connexion (11c) de ce troisième élément de revêtement pénètrent dans cette deuxième rainure (13b) et sont fixés à ce corps de support au niveau de cette deuxième rainure.

7. Elément de siège de véhicule (1) selon l'une quelconque des revendications 1 à 6, dans lequel ce(s) volet(s) de liaison comprennent les premiers éléments de connexion (15a, 15b, 15c, 15d) et ce corps de support comprend les deuxièmes éléments de connexion, ces premiers et deuxièmes éléments de connexion coopérant entre eux pour relier ces éléments de revêtement à ce corps de support.

8. Elément de siège de véhicule (1) selon la revendication 5 ou 6, dans lequel un fil métallique (14a, 14b) est agencé dans chacun de ces rainures (13a, 13b), dans lequel chacun de ces volets de fixation comprend un trou (15a, 15b, 15c, 15d), et dans lequel des anneaux (16) ou des éléments de fixation similaires passent autour de ce fil métallique et à travers le trou de ces volets de fixation agencés dans cette rainure.

9. Élément de siège de véhicule (1) selon la revendication 1, dans lequel ce revêtement (7) comprend un seul élément de revêtement (107), qui comprend au moins deux parties de jonction adjacentes (109a, 109b; 109a, 109c) et un volet de fixation (111a; 111b) agencé sur une portion du périmètre d'une première de ces deux parties de jonction adjacentes adjacente à une portion du périmètre de la deuxième de ces deux parties de jonction adjacentes, ce volet de fixation (111a; 111b) comprenant une première branche (111a'; 111b') qui, à partir de cette première partie de jonction, est repliée vers ce corps de support (3), et une deuxième branche (111a"; 111b") qui est repliée vers cette coiffe et se relie avec cette deuxième partie de jonction.

10. Elément de siège de véhicule (1) selon la revendication 9, dans lequel ce corps de support (3) comporte une section centrale (3a) et deux sections latérales (3b, 3c) agencées sur les côtés opposés de cette section centrale, dans lequel cette coiffe (5) est dimensionné de manière à recouvrir cette section centrale et ces sections latérales de ce corps de support, et dans lequel ce seul élément de revêtement (107) comprend une première partie de jonction (109a) fixée à cette coiffe au niveau de la section centrale de ce corps de support, une deuxième partie de jonction (109b) fixée à cette coiffe au niveau d'une première de ces sections latérales de ce corps de support et une troisième partie de jonction (109c) fixée à cette coiffe au niveau de la deuxième de ces sections latérales de ce corps de support, opposée à cette première section latérale.

11. Elément de siège de véhicule (1) selon la revendication 10, dans lequel cet élément de revêtement (107) comprend un premier volet de fixation (111a) agencé au niveau d'une portion du périmètre de cette première partie de jonction (9a) en face du périmètre de cette deuxième partie de jonction (109b) et un deuxième volet de fixation (111b) agencé au niveau d'une portion du périmètre de cette première partie de jonction (9a) en face du périmètre de cette troisième partie de jonction (109c).

12. Elément de siège de véhicule (1) selon l'une quelconque des revendications 1 à 11, dans lequel cette(s) partie(s) de jonction de cet(s) élément(s) de revêtement est / sont fixée(s) à cette coiffe par des points de couture (6).

13. Elément de siège de véhicule (1) selon l'une quelconque des revendications 1 à 11, cette(s) partie(s) de jonction de cet(s) élément(s) de revêtement est / sont fixée(s) à cette coiffe par une couche adhésive (6').

14. Elément de siège de véhicule (1) selon l'une quelconque des revendications 1 à 13, dans lequel cet(s) élément(s) de revêtement est / sont constitué(s) d'une feuille en mousse ou d'un tissu non tissé ou d'un tissu tissé, ou d'une combinaison de ceux-ci.

15. Procédé de fabrication d'un élément de siège de véhicule (1) comprenant un corps de support (3) et une coiffe (5), dimensionnée pour recouvrir ce corps de support et pourvue d'un revêtement (7), **caractérisé en ce que** ce procédé comprend les étapes de:
- fournir ce corps de support (3);
- fournir cette coiffe (5), cette coiffe étant dimensionnée de manière à recouvrir ce corps de support;
- fournir un ou plusieurs éléments de revêtement (7a, 7b, 7c; 107), au moins un de ces éléments de revêtement (7a, 7b, 7c ; 107) comprenant une partie de jonction (9a, 9b, 9c; 109a, 109b, 109c) et un volet de fixation (11a, 11b, 11e, 11d; 111a, 11b), agencé au niveau d'une portion du périmètre de cette partie de jonction (9a, 9b, 9c; 109a, 109b, 109c);
- replier ce(s) volet(s) de liaison (11a, 11b, 11c, 11d; 111a, 111b) de cet(s) élément(s) de revêtement (7a, 7b, 7c; 107) vers ce corps de support (3) et, le cas échéant, assembler ces volets de liaison entre eux par une couture (12 ; 112) ou par une couche adhésive;
- attacher cette(s) partie(s) de jonction (9a, 9b, 9c; 109a, 109b, 109c) de cet(s) élément(s) de revêtement (11a, 11b, 11c, 11d; 11a, 111b) au dessous de cette coiffe (5);
- fixer ce(s) volet(s) de liaison (11a, 11b, 11c, 11d; 111a, 111b) de ce(s) élément(s) de revêtement (11a, 11b, 11c, 11d; 111a, 11b) à ce corps de support (3);
de sorte que cette coiffe (5) est reliée à ce corps de support (3) au moyennant de ce revêtement (7).
